# EUROPÄISCHE PATENTSCHRIFT

(11) **EP 3 120 117 B1**
(45) Veröffentlichungstag und Bekanntmachung des Hinweises auf die Patenterteilung: **31.03.2021**
(21) Anmeldenummer: 15705621.9
(22) Anmeldetag: 23.02.2015
(51) Int. Cl.: G01F 1/66, G01H 9/00, G10K 9/122, G10K 9/22

(54) **ULTRASCHALLWANDLER UND ULTRASCHALL-DURCHFLUSSMESSGERÄT**
ULTRASONIC TRANSDUCER AND ULTRASONIC FLOW METER
TRANSDUCTEUR D'ULTRASONS ET DÉBITMÈTRE À ULTRASONS

(30) Priorität: 21.03.2014 DE 102014103884
(43) Veröffentlichungstag der Anmeldung: 25.01.2017
(60) Teilanmeldung: 20211010.2
(73) Patentinhaber: Endress+Hauser Flowtec AG, 4153 Reinach (BL) (CH)
(72) Erfinder: WIEST, Achim, 79576 Weil am Rhein (DE); BERGER, Andreas, 79686 Hasel-Glashütten (DE)
(74) Vertreter: Andres, Angelika Maria
(86) Internationale Anmeldenummer: PCT/EP2015/053684
(87) Internationale Veröffentlichungsnummer: WO 2015/139918

(56) Entgegenhaltungen:
- EP-A1- 0 974 814
- DE-A1-102009 046 149
- DE-A1-102012 207 871

## Beschreibung

Die vorliegende Erfindung betrifft einen Ultraschallwandler und ein Ultraschall-Durchflussmessgerät.

Im Bereich der Ultraschallwandler-Aufbauten ist bereits eine Vielzahl von verschiedenen Varianten und Schichtabfolgen bekannt.

Die gattungsgemäße EP 0 974 814 B1 beschreibt ein Koppelelement mit einer Auflage bzw. Kontaktfläche, welches eine Ausnehmung zur Aufnahme eines Piezoelements aufweist. Zwischen dem Koppelelement und dem Piezoelement ist eine Metallscheibe angeordnet. Diese Metallscheibe ist in einer zur Auflage auf einer zur Auflagefläche schrägen Ebene, welche zugleich eine Grundfläche der Ausnehmung bildet, aufgeklebt. Diese Konstruktion mit integrierter Metallscheibe hat sich grundlegend bewährt und besticht im Vergleich zu Glas- und Keramikscheiben durch seine hohe Belastbarkeit bei Temperatur-Wechselbeanspruchung.

Bei der Herstellung einer Abfolge mehrerer Schichten, wie in der EP 0 974 814 B1, ist darauf zu achten, dass die Elemente möglichst passgenau zueinander ausgerichtet sind. So sollte z.B. die Metallscheibe möglichst parallel zum Ultraschallwandler ausgerichtet sein. Dabei kann ein Kleber genutzt werden. Während des Aushärtens des Klebers kann es z.B. aufgrund von transportbedingten Erschütterungen oder durch andere Gründe zu einem Verschieben der Einzelkomponenten kommen.

Es ist daher im Interesse eine möglichst schnelle Fixierung der Einzelkomponenten zu erreichen. Ein schnelleres Aushärten des Klebstoffes z.B. durch eine Überdosierung von Härter oder eine erhöhte Temperaturbelastung kann allerdings zu Spannungsrissen führen oder sich in sonstiger Weise negativ auf die Eigenschaften des Koppelelements auswirken oder zu nachteiligen Effekten (u.a. Luftblasen) innerhalb der Klebstoffschichten führen. Auch in diesen Fällen ist der Ultraschallwandler mangelhaft.

Die DE 10 2012 207 871 A1 offenbart die Verwendung eines photochemisch-aushärtbaren Klebers zur Fixierung einer Zwischenschicht. In dieser Druckschrift wird allerdings explizit verlangt, dass die zu-fixierende Zwischenschicht zumindest teilweise transparent sein sollte. Dabei wird vorwiegend von einer vollflächigen Aushärtung des Klebers ausgegangen, weswegen eine nach Möglichkeit vollflächige Bestrahlung vorgeschlagen wird. Eine Metallscheibe, als wärmeleitfähige Zwischenschicht, wie sie in der EP 0 974 814 B1 vorgeschlagen wird, widerspricht daher dem Konzept der DE 10 2012 207 871 A1, da sie nicht transparent ist.

Darüber hinaus wird in der DE 10 2013 104 542 A1 ein Ultraschallwandlerelement mit einer Ankopplungsschicht beschrieben, in welchem ebenfalls eine Metallscheibe eingesetzt wird.

Daher ist es Aufgabe der vorliegenden Erfindung einen Ultraschallwandler bereitzustellen, welcher schnell und ggf. unter möglichst geringer Temperaturbeanspruchung herstellbar ist.

Die Erfindung löst diese Aufgabe durch einen Ultraschallwandler mit den Merkmalen des Anspruchs 1.

Ein erfindungsgemäßer Ultraschallwandler umfasst ein Koppelelement und ein Piezoelement, wobei zwischen dem Koppelelement und dem Piezoelement eine Metallscheibe angeordnet ist. Die die Metallscheibe ist mittels einer Klebstoffschicht mit dem Piezoelement verbunden.

Die Metallscheibe ist zur Auflage des Piezoelements vorgesehen und kann in einer Ausnehmung des Koppelkörpers angeordnet sein. Zusätzlich kann diese Metallscheibe auch mit einer weiteren Schicht aus einem nichtmetallischen Material versehen.

Idealerweise weist die Metallscheibe eine bevorzugte Schichtdicke kleiner als 1/8 λ (lambda), vorzugsweise kleiner 1/16 λ auf. Sie übernimmt nicht die Funktion einer akustischen Anpassung, sondern lediglich des thermischen Ausgleichs zwischen dem Piezoelement gegenüber den darunter angeordneten Schichten - respektive dem Koppelelement und ggf. einer Anpassungsschicht. Die Metallscheibe weist dabei vorzugsweise einen thermischen Ausdehnungskoeffizienten von kleiner 30 ppm/K, besonders bevorzugt kleiner 25 ppm/K auf. Die Metallscheibe sollte möglichst eben ausgebildet sein, damit es zu keinem Winkelversatz zwischen der Ebene der Grundfläche des Koppelelements gegenüber der Ebene des Piezoelements kommt. Die Ebenheit der Metallscheibe beträgt dabei vorzugsweise weniger als 1/16, insbesondere weniger als 1/32 lambda.

Gemäss der Erfindung ist die Klebstoffschicht zumindest bereichsweise mittels eines photochemisch aushärtbaren Klebers herstellbar. Der Koppelkörper bzw. das Koppelelement weist eine zum Messmedium hingewandte Koppelfläche auf, zum Aus- und/oder Einkoppeln eines Ultraschallnutzsignals in das Koppelelement, und wobei das Koppelelement zumindest eine Reflexionsfläche aufweist, welche eine Umleitung einer durch die Koppelfläche in das Koppelelement eintretenden UV-Strahlung in den Randbereich der Metallscheibe ermöglicht. Die Reflexionsfläche wird durch das Koppelelement selbst gestellt. Zusätzlich kann auch eine reflektierende Beschichtung vorgesehen sein.

Vorteilhafte Ausgestaltungen der Erfindung sind Gegenstand der Unteransprüche.

Die ausgehärtete Klebstoffschicht kann nicht-reagierte Photoinitiatoren oder Restmonomere aufweisen, mit funktionellen Gruppen, welche unter photochemischer Bestrahlung chemische Bindungen oder Radikale ausbilden. Die ausgehärtete Klebstoffschicht kann vorzugsweise Reste einer Mikroverkapselung aufweisen.

Die Klebstoffschicht kann in einem Randbereich der Metallscheibe photochemisch vernetzt sein und in einem Mittelbereich der Metallscheibe thermisch vernetzt vorliegen. Dies kann beispielsweise dadurch beobachtet werden, dass Photoinitiator-Moleküle im Zentrum der Klebstoffschicht noch unaktiviert vorliegen und nicht als Bestandteil in einem polymeren Netzwerkes eingebunden sind, sondern in erhöhter Konzentration lediglich von einem Polymermaterial umgeben sind, ohne chemische Bindungen auszubilden oder zumindest keine durch Bestrahlung aktivierten Bindungen.

An der Reflexionsfläche kann zudem eine Bündelung der Strahlung erfolgen.

Die Klebstoffschicht kann insbesondere aus einem 2-Komponenten Kleber bestehen, wobei zumindest eine Komponente durch die Mikroverkapselung umschlossen ist. Nach Zerstörung der Mikroverkapselung kann es zur Polymerisation kommen.

Der Koppelkörper kann vorteilhaft zumindest teilweise transparent sein. Beispielsweise bei Bestrahlung des Klebstoffs durch den Koppelkörper zur Metallscheibe hin gelingt dadurch eine Aushärtung des Klebers ohne zusätzliche Hilfsmittel.

Die Klebstoffschicht kann zwischen der Metallscheibe und dem Koppelkörper die gleiche chemische Zusammensetzung aufweisen wie die Klebstoffschicht zwischen der Metallscheibe und dem Piezoelement.

Ein erfindungsgemäßes Ultraschall-Durchflussmessgerät zur Ermittlung der Durchflussgeschwindigkeit oder des Volumendurchflusses eines Messmediums weist ein Messrohr und zumindest zwei entlang des Messrohres angeordneten erfindungsgemäße Ultraschallwandlern auf, wobei ein jeder der Ultraschallwandler das Koppelelement mit einer Koppelfläche aufweist, an welcher ein erzeugtes Ultraschallsignal in das Messrohr oder in das Messmedium übertragen oder empfangen werden kann.

Es kann auch nur eine der beiden Klebeschichten im Bereich der Metallscheibe vorgesehen sein. So kann zwischen der Metallscheibe und dem Koppelelement anstelle der Klebeschicht auch eine λ/4-Anpassungsschicht vorgesehen sein, wie sie im Detail in der DE 10 2013 104 542 A1 beschrieben wird. Dieser Begriff ist dem Fachmann geläufig. Es handelt sich bei einer solchen Anpassungsschicht um eine Schichtdicke, welche einem Vielfachen eines Viertels der Wellenlänge des Ultraschallsignals in dem Material der Anpassungsschicht entspricht, wobei die Schichtdicke je nach akustischer Anforderung an die Bandbreite auch um ± 25% von diesem Wert abweichen kann. Im Gegensatz zu einer Typischen Klebstoffschicht, deren Schichtdicke bei unter 3/8 lambda liegt.

Nachfolgend wird der Gegenstand der Erfindung anhand mehrerer Ausführungsbeispiele in den beigefügten Figuren näher erläutert. Sie zeigen:
Fig. 1 Explosionsansicht eines ersten erfindungsgemäßen Ultraschallwandlers;
Fig. 2 Schnittansicht des ersten Ultraschallwandlers;
Fig. 3 Detailansicht des erfindungsgemäßen Ultraschallwandlers;
Fig. 4 Detailansicht eines zweiten erfindungsgemäßen Ultraschallwandlers;
Fig. 5 Schnittansicht eines dritten erfindungsgemäßen Ultraschallwandlers;
Fig. 6 Detailansicht des dritten erfindungsgemäßen Ultraschallwandlers;
Fig. 7 Detailansicht eines vierten erfindungsgemäßen Ultraschallwandlers; und
Fig. 8 Detailansicht eines fünften erfindungsgemäßen Ultraschallwandlers.

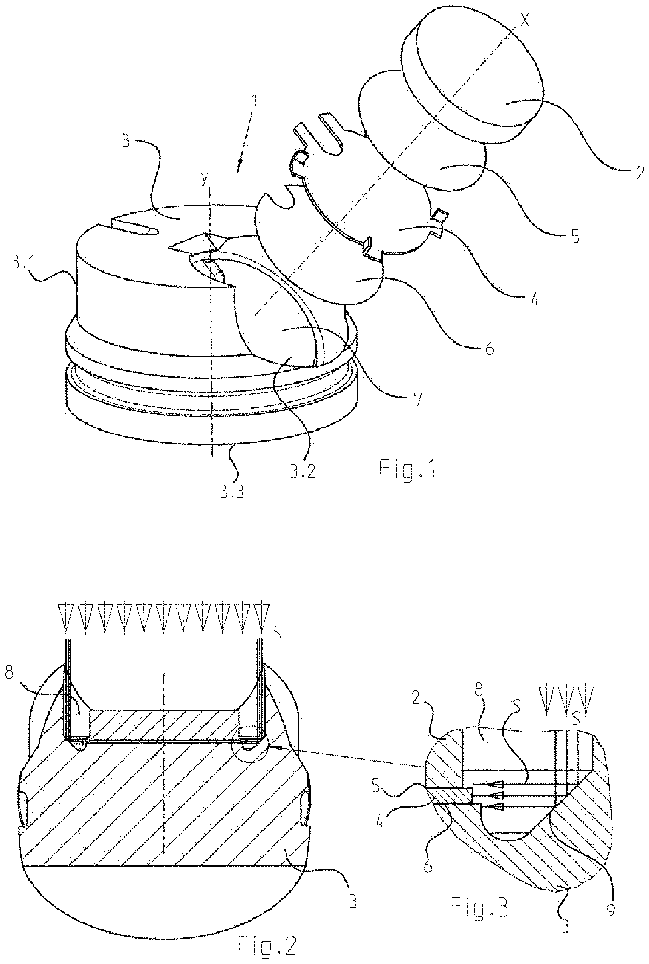

Fig. 1 zeigt einen erfindungsgemäßen Ultraschallwandler 1 mit einem Koppelelement 3.

Der Ultraschallwandler 1 weist eine Anordnung aus einem Piezoelement 2, einer Metallscheibe 4 und einem Koppelelement 3 auf. Zwischen dem Piezoelement 2 und der Metallscheibe ist eine erste Klebstoffschicht 5 angeordnet. Zwischen der Metallscheibe 4 und dem Koppelelement 3 ist eine zweite Klebstoffschicht 6 angeordnet.

Dieses Koppelelement 3 wird oftmals auch Koppelkörper genannt. Sehr oft sind Koppelelemente keilförmig ausgestaltet, weshalb der Fachmann auch von einem Koppelkeil spricht.

Auch im vorliegenden Ausführungsbeispiel ist das Koppelelement 3 als Koppelkeil ausgestaltet. Die Grundform des Koppelelements ist zylindrisch mit einer Mantelfläche 3.1 und zwei Grundflächen 3.2 und 3.3. Dabei ist eine der beiden Grundflächen 3.2 gegenüber der anderen Grundfläche 3.3 abgewinkelt, so dass ein Normalenvektor X der Grundfläche 3.2 winkelig zum Normalenvektor Y der Grundfläche 3.3 angeordnet ist. Der Normalenvektor X der Grundfläche 3.2 ist dabei gleich dem Normalenvektor zumindest des Piezoelements 2 und/oder der Metallscheibe 4. Die Grundfläche 3.3 dient als Koppelfläche und leitet ein Ultraschallnutzsignal im Fall eines Clamp-on Ultraschall-Durchflussmessgerätes in die Rohrwandung eines mediumsführenden Rohres ein. Im Fall eines sogenannten In-Line Durchflussmessgerätes, also eines Gerätes mit fest installiertem Messrohr, kann das Ultraschallnutzsignal auch direkt ins Medium eingeleitet werden.

Das in Fig. 1 dargestellte Koppelelement 3 weist eine spezielle Ausnehmung 7 in Form einer Schrägbohrung auf, in welcher das Piezoelement 2 und die Metallscheibe 4 festlegbar sind.

Die im Koppelelement 3 angeordnete Ausnehmung 7 ist im vorliegenden Ausführungsbeispiel eine zylindrische Vertiefung mit der kreisförmigen Grundfläche 3.2. Je nach Form des Piezoelements 2 sind allerdings auch andere geometrische Formen denkbar. Daher kann die Grundfläche 3.2 dieser Vertiefungen beispielsweise quadratisch oder rechteckig ausgestaltet sein.

An der Grundfläche 3.2 wird der überwiegende Anteil, also mehr als 50% des vom Piezoelement erzeugten Ultraschallsignals, in das Koppelelement 3 eingeleitet. Zugleich wird durch den Winkel der Grundfläche 3.2 in Abweichung von dessen Parallelausrichtung zur Grundfläche 3.3 als der Eintrittswinkel des Ultraschallsignals in das Messmedium definiert.

In die Ausnehmung wird ein Klebstoff zum Verkleben des Koppelelements 3 mit der Metallscheibe 4 eingebracht. Dieser bildet nach seiner Aushärtung die zweite Klebstoffschicht 6 aus. Als Klebstoff ist im Sinne des Patents jede Substanz zu verstehen, welche aushärtbar ist und in diesem ausgehärteten Zustand eine Fixierung zwischen zwei Elementen, hier der Metallscheibe 4 und dem Koppelelement 3 oder der Metallscheibe 4 und dem Piezoelement 2 schafft.

Die Klebstoffschichten sind insbesondere bis maximal 1 mm dick, vorzugsweise jedoch maximal 0,5 mm dick. Alternativ kann die Anbindung zwischen der Metallscheibe 4 und dem Koppelelement 3 durch einen Verguss der Dicke eines Vielfachen von lambda/4 erfolgen.

Zur Ausbildung der Klebstoffschicht kommen vier erfindungsgemäße Varianten in Frage, welche jeweils die Aufgabe einer schnellen Fixierung der Einzelbauteile bei geringerer Temperaturbeanspruchung auf unterschiedliche Weise lösen.

Zur Ausbildung der ersten und/oder zweiten Klebstoffschicht 5, 6 kann gemäß einer ersten erfindungsgemäßen Variante ein photochemisch aushärtbaren Kleber genutzt werden.

Zu den entsprechenden photochemischen Klebern gehören u.a. die UV-Kleber, welche z.B. von der der Fa. Loctite bezogen werden können.

Es ist z.B. möglich, dass ein einkomponentiger oder mehrkomponentiger Klebstoff bei UV-bestrahlung aktiviert wird und Bindungen ausbildet. Dies ist beispielsweise bei photoinitiiert härtenden Acrylaten der Fall. Alternativ kann auch ein sogenannter Photoaktivator genutzt werden, welcher unter Einstrahlung von UV-Licht zunächst aktiviert wird, beispielsweise unter Radikalbildung, und anschließend diese Radikale weitere Komponenten des Klebers zur Kettenreaktion/Vernetzung anregen.

Geeignete Grundsysteme für Kleberkomponenten sind z.B. Acrylate, Polyurethane oder Epoxidharze. Die Aushärtung kann beispielsweise mit einer LED-Aushärtungslampe ermöglicht werden, so z.B. mit einer Delolux 80. Die Temperaturentwicklung ist dabei wesentlich geringer als mit einer herkömmlichen Entladungslampe. Die Lichtwellenlänge beträgt vorzugsweise 300 bis 480 nm.

Zur Ausbildung der ersten und/oder zweiten Klebstoffschicht 5, 6 kann gemäß einer zweiten Variante , die nicht Teil der Erfindung ist, in Kleber verwandt werden, welcher zumindest eine mikroverkapselte polymerisationsaktivierende Komponente enthält, welche unter Einwirkung von Mikrowellen freisetzbar ist.

Mikroverkapselungen sind an sich bekannt und werden z.B. im größeren Umfang in der Lebensmittelindustrie eingesetzt. Auch mikroverkapselte Klebstoffe sind an sich bekannt (siehe "Kleben - Grundlagen, Technologien, Anwendungen"; Gerd Habenich, 6.aktualisierte Auflage, S. 238-240). Derartige Klebstoffe werden z.B. beim Verkleben von Schrauben eingesetzt, wo die Mikrokapseln aufgrund von Schereinflüssen zerstört werden. Derartige klebende Gewindevorbeschichtungen kommen z.B. in Produkten der Fa. PreLok zum Einsatz. Mikroverkapselungen mit eingeschlossenen Klebstoffkomponenten sind beispielsweise durch das sogenannte Vertropfungsverfahren herstellbar. Dabei liegt zumindest eine Komponente, welche ggf. in Zusammenwirkung mit weiteren Komponenten eine polymere Kettenreaktion auslöst, in der Mikroverkapselung vor. Diese Komponente kann beispielsweise ein Härter sein. Im Fall von Epoxiden kann der Härter beispielsweise ein mehrfaches Amin (z.B. Diethylentriamin) sein. Alternativ kann auch eine Komponente des Klebstoffs z.B. ein Polyol in der Mikroverkapselung eingeschlossen sein.

Die hochenergetische Mikrowellenstrahlung ermöglicht ein Zerplatzen der Mikroverkapselungen. Dadurch kommt es zur Polymerisation und/oder zur Vernetzung bereits bestehender Polymerketten.

Zusätzlich kann die Mikroverkapselung, die verkapselten Komponenten und/oder die unverkapselten Komponenten vorteilhaft weitere Inhaltsstoffe enthalten, welche sich unter Mikrowellenbestrahlung oder durch Induktion stark erhitzen und dadurch punktuell Wärme entwickeln, welche die Polymerisations- und/oder Vernetzungsreaktion unterstützt. Ein größerer Wärmeeintrag von außen, welcher die restlichen Bauteile, so z.B. den Koppelkörper oder das Piezoelement belastet, ist daher nicht notwendig oder zumindest nur im verringerten Umfang nötig. Die besagten Inhaltsstoffe sind wärmeabsorbierende Partikel so z.B. Metallpartikel.

Zur Ausbildung der ersten und/oder zweiten Klebstoffschicht 5, 6 kann gemäß einer dritten Variante, die nicht Teil der Erfindung ist, in Kleber verwandt werden, welcher zumindest eine mikroverkapselte polymerisationsaktivierende Komponente enthält, welche unter Einwirkung von Ultraschallwellen freisetzbar ist.

Eine derartige Technologie wird z.B. in der Medizintechnik eingesetzt um UltraschallKontrastmittel unter Ultraschalleinwirkung freizusetzen. Eine entsprechende Technologie und die Mikroverkapselungen sind in der EP 0 977 594 B1 beschrieben.

Im Unterschied zur dortigen Technologie wird die Mikroverkapselung im vorliegenden Fall zum Einschluss einer Klebstoffkomponente genutzt. Die Mikroverkapselungen können durch die Ultraschallwellen des Piezoelements 2 des Ultraschallwandlers 1 zum Platzen gebracht werden. Dadurch wird die zur Messung zur Verfügung stehende Anordnung zugleich bei deren Herstellung genutzt. Hierfür kann das Piezoelement mit einer Anregungsenergie während des Herstellungsprozesses beaufschlagt werden, welche höher ist, als die übliche Anregungsenergie im Messmodus.

Auch im vorliegenden Fall kann die Mikroverkapselung, die verkapselte und/oder die unverkapselte Komponente Inhaltsstoffe enthalten, welche sich unter Mikrowellenbestrahlung oder durch Induktion stark erhitzen und dadurch punktuell Wärme entwickeln, welche die Polymerisations- und/oder Vernetzungsreaktion unterstützt. Auch hier kann es sich um wärmeabsorbierende Partikel, wie z.B. Metallpartikel, handeln.

Zur Ausbildung der ersten und/oder zweiten Klebstoffschicht 5, 6 kann gemäß einer vierten Variante, die nicht Teil der Erfindung ist, in Klebstoff genutzt werden, welcher zumindest bereichsweise mit einer Komponente angereichert ist, welche unter Einwirkung von NF oder HF-Feldern induktiv erwärmbar ist

Derartige Komponenten können z.B. ferromagnetische Legierungen oder Metalle wie Nickel-Eisen sein. Diese Komponenten sind auch nach der Aushärtung in der Klebstoffschicht nachweisbar. Die Klebstoffschicht enthält daher auch im ausgehärteten Zustand Reste einer NF- oder HF-Felder absorbierenden Komponente.

Der besondere Vorteil des Erwärmens mit Mikrowellen, Induktion oder auch der Mikroverkapselung ist die lokal begrenzte Wirkung und somit für die umliegenden Materialien schonende Polymerisierung. Dabei ist der Wärmeeintrag für diese Polymerisierung sehr gering.

Nach gestarteter Polymerisation kann die Klebstoffschicht lediglich vorfixiert oder in einem Prozessschritt vollständig ausgehärtet werden. Im Fall einer Vorfixierung kann sich auch eine Wärmebehandlung anschließen um eine vollständige Polymerisation zu erreichen. Hierbei kann der Wärmeeintrag vorteilhaft geringer gewählt werden, so dass auch in diesem Fall eine hitzeschonende Herstellung für die restlichen Komponenten (wie z.B. für das Piezoelement- oder Koppelelementmaterial) möglich ist.

Bereits bekannte Konzepte zur Befestigung einer Auflageplatte gehen davon aus diese Auflageplatte sofort mit dem Piezoelement oder dem Koppelkörper zu verbinden. Die Verwendung der vorgenannten Kleber erlauben ein sequentielles Aushärten des Klebers.

Im Fall der Verwendung eines photochemisch-aushärtbaren Kleber und unter Bestrahlung wie in Fig. 2 und 3 dargestellt, wird erreicht, dass durch die Bestrahlung eine randseitige Fixierung zwischen Koppelelement 3 und der Metallscheibe 4 erfolgt. Dies ist als eine Art Vorfixierung zu verstehen. Durch diese jeweils randseitige Fixierung zwischen Koppelelement und Metallscheibe und zwischen Metallscheibe und Piezoelement ist es möglich diese Elemente gegen Verrutschen zu schützen bevor ein endgültiges Aushärten erfolgt.

Nach erfolgter Vorfixierung kann je nach Intensität der Bestrahlung noch zu einem geringen Grad eine Feinjustierung bzw. Feinausrichtung der einzelnen Bauteile der Ultraschallwandleranordnung erfolgen.

Ein endgültiges Aushärten und damit ein Fixieren kann beispielsweise im Anschluss in einem Ofen erfolgen oder alternativ durch vollflächige Bestrahlung durch das Koppelelement 3 hindurch, sofern dieses transparent gegenüber der polymerisationsanregenden Strahlung, z.B. UV-Strahlung, ist In einer, die nicht Teil der Erfindung ist, kann der verwendete Kleber eine mikroverkapselte polymerisationsaktivierende Komponente enthalten, welche unter Einwirkung von Ultraschallwellen freisetzbar ist.

Der besondere Vorteil dieser Variante ist, dass die Ultraschallwellen des Ultraschallwandlers selbst die Mikroverkapselungen zum Platzen bringen können. In einer ersten Frequenz, welche der Resonanzfrequenz der Mikrokapseln entspricht, werden somit die Kapseln zum Platzen gebracht. Mit einer zweiten Frequenz werden Ultraschallwellen als Messsignale ausgesandt. In Abhängigkeit von der Dauer der Frequenz kann der Anwender bestimmen, wie viele Kapseln er sprengen möchte. Somit ist es möglich, die Metallscheibe vorzufixieren, auszurichten und schließlich endgültig zu fixieren.

Die vorgenannten Befestigungsmöglichkeiten gelten vorzugsweise sowohl für die Ausbildung der ersten als auch der zweiten Klebstoffschicht.

Die Bestrahlung der randseitigen Bereiche der Metallscheibe bzw. der Klebstoffschichten zur Vorfixierung kann dadurch erreicht werden, dass eine Strahlenquelle in diesem randseitigen Bereich positioniert wird.

Es ist allerdings auch möglich das Koppelelement 3 derart auszugestalten, dass ein Freiraum 8 zwischen der Randseite der Metallscheibe 4 und des Piezoelements und der randseitigen Begrenzung der Ausnehmung 7 besteht. Einen Ultraschallwandler mit einem derartigen Koppelelement 3 kann man in Fig. 2 und Fig. 3 sehen.

Die Strahlung S der Strahlenquelle, also z.B. des Ultraschall-, Mikrowellen- oder UV-Strahlers fällt durch den Freiraum 8 des Koppelelements 3 ein und verläuft geradlinig bis zu einer Umlenkkante 9. An dieser Umlenkkante 9 wird die Strahlung umgelenkt.

Die Umlenkkante 9 kann dabei mit einer strahlungsreflektierenden Schicht oder einer ultraschallwellenreflektierenden Schicht versehen sein. Dies erfolgt in Fig. 2 einem Winkel von 90°. Dadurch ist die Strahlung parallel oder im Wesentlichen parallel zur ersten und/oder zweiten Klebstoffschicht 5, 6 ausrichtbar und ermöglicht ein randseitiges Aushärten zur Vorfixierung der Bauteile, respektive des Piezoelements 2, der Metallscheibe 4 und des Koppelelements 3 übereinander.

Anschließend kann eine Feinausrichtung der Metallscheibe oder des Piezoelements erfolgen oder ein Transport innerhalb einer Fertigungsanlage.

Schließlich kann eine Aushärtung erfolgen indem der Kleber welcher sich mittig befindet durch das Koppelelement hindurch bestrahlt wird oder indem der Kleber thermisch ausgehärtet wird. Dabei kann vorzugsweise eine geringere Energie aufgewandt werden als bei einer üblichen thermischen Vernetzung ohne vorangegangene photochemische Aushärtung

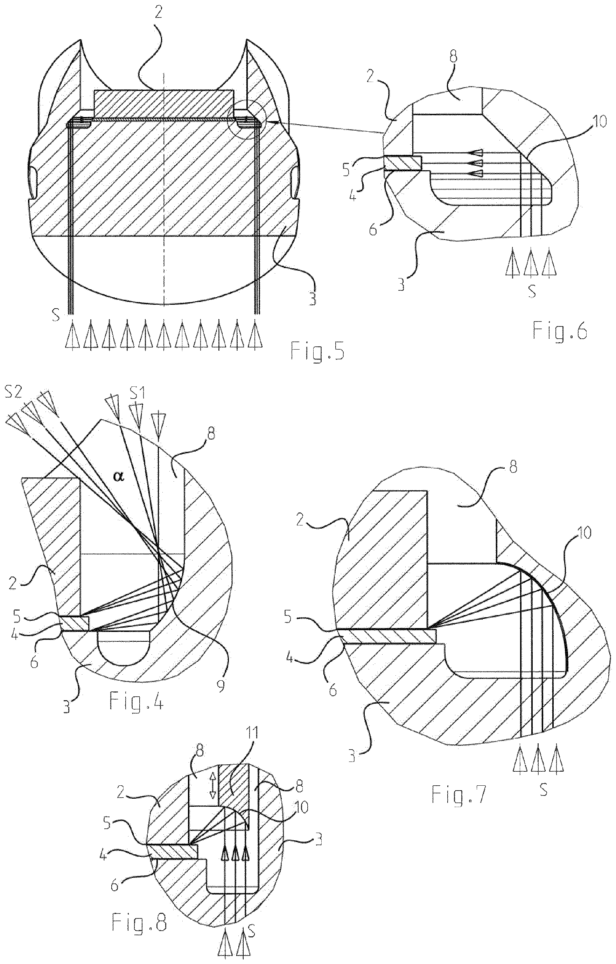

Fig. 4 zeigt eine weitere vorteilhafte Variante auf, welche z.B. für eine photochemische Aushärtung, eine Ultraschallwellen- oder eine Mikrowellenaktivierte Aushärtung in Frage kommt. Dabei weist der Koppelkörper eine Fokussierfläche 9 auf. Diese kann in den Koppelkörper eingefräst sein und anschließend mit einer Schicht, z.B. einer Metallschicht, versehen sein, welche einfallende Strahlung oder Ultraschallwellen in Richtung der Klebstoffschichten 5, 6 umlenkt und bündelt.

Fig. 5 und 6 zeigen eine Variante bei welcher Strahlung oder Ultraschallwellen durch den Koppelkörper 3 durchtreten an einer Umlenkkante 10 reflektiert werden und anschließend randseitig in Richtung der Klebstoffschichten 5 und 6 abgelenkt werden. In dieser Version ist die Umlenkkante beschichtet mit einer Reflexionsschicht, welche eine Reflexionsfläche bereitstellt

Fig. 7 und Fig. 8 zeigen jeweils Varianten der Bündelung, welche zusätzlich die einfallende Strahlung oder Ultraschallwellen bündeln und dadurch gezielter auf den randseitigen Bereich der Klebstoffschicht lenken.

In Fig. 7 erfolgt dies an einer Fokussierfläche 10 welche eine auf das Koppelelement 3 aufgebrachte reflektierende Schicht ist. Die Kontur bzw. Wölbung der Fokussierfläche 10 kann integral in den Koppelkörper 3 eingearbeitet werden.

In Fig. 8 erfolgt die Bündelung durch ein gesondertes Fokussierelement 11, welches in den Freiraum 8 hineinragt. Dieses Fokussierelement 11 stellt eine Fokussierfläche 10 bereit, an welcher die Umlenkung und Bündelung von Strahlung oder Ultraschallwellen erfolgt. Das Fokussierelement 11 kann lösbar am Koppelelement 3 angeordnet sein, so dass es mehrfach im Produktionsprozess eingesetzt werden kann.

Es versteht sich, dass ein entsprechendes Fokussierelement auch in Fig. 4 anstelle der dortigen Fokussierfläche 9 angeordnet sein kann.

## Patentansprüche

1. Ultraschallwandler (1) umfassend ein Koppelelement (3) und ein Piezoelement (2), wobei zwischen dem Koppelelement (3) und dem Piezoelement (2) eine Metallscheibe (4) angeordnet ist,
wobei die Metallscheibe (4) mittels einer Klebstoffschicht (5 oder 6) mit dem Piezoelement (2) oder mit dem Koppelelement (3) verbunden ist,
wobei das Koppelelement (3) eine zum Messmedium hingewandte Koppelfläche (3.3) aufweist, zum Aus- und/oder Einkoppeln eines Ultraschallnutzsignals in das Koppelelement (3),
**dadurch gekennzeichnet, dass** die Klebstoffschicht (5 oder 6) zumindest bereichsweise mittels eines photochemisch aushärtbaren Klebers hergestellt ist, wobei das Koppelelement (3) zumindest eine Reflexionsfläche (9, 10) aufweist, welche eine Umleitung einer durch die Koppelfläche (3.3) in das Koppelelement (9, 10) eintretenden UV-Strahlung in einen Randbereich der Metallscheibe (4) ermöglicht.

2. Ultraschallwandler nach Anspruch 1, **dadurch gekennzeichnet, dass** die Klebstoffschicht (5 oder 6) nicht-reagierte Photoinitiatoren oder Restmonomere aufweist, mit funktionellen Gruppen, welche unter Einwirkung von Lichtstrahlung chemische Bindungen oder Radikale ausbilden.

3. Ultraschallwandler nach einem der vorhergehenden Ansprüche, **dadurch gekennzeichnet, dass** die Klebstoffschicht (5 oder 6) in dem Randbereich der Metallscheibe photochemisch vernetzt ist und in einem Mittelbereich der Metallscheibe thermisch vernetzt ist.

4. Ultraschallwandler nach einem der vorhergehenden Anspruche, **dadurch gekennzeichnet, dass** die Reflexionsfläche (9, 10) eine Fokussierfläche (9, 10) zur Bündelung der UV-Strahlung auf einen randseitigen Bereich des Klebers aufweist.

5. Ultraschallwandler nach einem der vorhergehenden Ansprüche, **dadurch gekennzeichnet, dass** die Klebstoffschicht hergestellt ist aus einem 2-Komponenten Kleber, wobei zumindest eine Komponente durch eine Mikroverkapselung umschlossen ist.

6. Ultraschallwandler nach einem der vorhergehenden Ansprüche, **dadurch gekennzeichnet, dass** das Koppelelement (3) zumindest teilweise transparent ist.

7. Ultraschallwandler nach einem der vorhergehenden Ansprüche, **dadurch gekennzeichnet, dass** jeweils eine Klebstoffschicht (5 und 6) sowohl zwischen dem Piezoelement (2) und der Metallscheibe (4), als auch zwischen der Metallscheibe (4) und dem Koppelelement (3) angeordnet ist und wobei die Klebstoffschicht (6) zwischen der Metallscheibe (3) und dem Koppelelement (3) vorzugsweise die gleiche chemische Zusammensetzung aufweist wie die Klebstoffschicht (5) zwischen der Metallscheibe (4) und dem Piezoelement (2).

8. Ultraschall-Durchflussmessgerät zur Ermittlung der Durchflussgeschwindigkeit oder des Volumendurchflusses eines Messmediums mit einem Messrohr und zumindest zwei entlang des Messrohres angeordneten Ultraschallwandlern gemäß einem der Ansprüche 1-7, wobei ein jeder der Ultraschallwandler den Koppelkörper mit einer Koppelfläche aufweist, an welcher ein erzeugtes Ultraschallsignal in das Messrohr oder in das Messmedium übertragen oder empfangen werden kann.

## Claims

1. Ultrasonic converter (1) comprising a coupling element (3) and a piezoelectric element (2), wherein a metal disk (4) is arranged between the coupling element (3) and the piezoelectric element (2),
wherein the metal disk (4) is connected to the piezoelectric element (2) or the coupling element (3) by means of an adhesive layer (5 or 6),
wherein the coupling element (3) has a coupling surface (3.3) facing towards the measured medium, said surface being designed to decouple and/or couple an ultrasonic useful signal in the coupling element (3),
**characterized in that** the adhesive layer (5 or 6) is at least partially made from a photochemically hardenable adhesive, wherein the coupling element (3) has at least a reflection surface (9, 10), which enables the redirection of a UV ray, entering into the coupling element (3) through the coupling surface (3.3), into a marginal area of the metal disk (4).

2. Ultrasonic converter as claimed in Claim 1, **characterized in that** the adhesive layer (5 or 6) has non-reactive photoinitiators or residual monomers, with functional groups that form chemical bonds or radicals with the effect of light radiation.

3. Ultrasonic converter as claimed in one of the previous claims, **characterized in that** the adhesive layer (5 or 6) is photochemically linked in the marginal area of the metal disk and is thermally linked in a central area of the metal disk.

4. Ultrasonic converter as claimed in one of the previous claims, **characterized in that** the reflection surface (9, 10) has a focus surface (9, 10) to concentrate the UV ray onto a marginal area of the adhesive.

5. Ultrasonic converter as claimed in one of the previous claims, **characterized in that** the adhesive layer is made from a 2-component adhesive, wherein at least one component is surrounded by a microencapsulation.

6. Ultrasonic converter as claimed in one of the previous claims, **characterized in that** the coupling element (3) is at least partially transparent.

7. Ultrasonic converter as claimed in one of the previous claims, **characterized in that** an adhesive layer (5 and 6) is arranged both between the piezoelectric element (2) and the metal disk (4), and between the metal disk (4) and the coupling element (3), and wherein the adhesive layer (6) preferably has the same chemical composition between the metal disk (4) and the coupling element (3) as the adhesive layer (5) between the metal disk (4) and the piezoelectric element (2).

8. Ultrasonic flowmeter to determine the flow velocity or volume flow of a measured medium with a measuring tube and at least two ultrasonic converters as claimed in one of the Claims 1 to 7, said converters being arranged along the measuring tube, wherein each of the ultrasonic converters has a coupling body with a coupling surface at which a generated ultrasonic signal can be transmitted to the measuring tube or measured medium or can be received.

## Revendications

1. Convertisseur à ultrasons (1) comprenant un élément de couplage (3) et un élément piézoélectrique (2), un disque métallique (4) étant disposé entre l'élément de couplage (3) et l'élément piézoélectrique (2),
le disque métallique (4) étant relié au moyen d'une couche d'adhésif (5 ou 6) avec l'élément piézoélectrique (2) ou avec l'élément de couplage (3),
l'élément de couplage (3) présentant une surface de couplage (3.3) faisant face au produit mesuré, laquelle surface est destinée au découplage et/ou au couplage d'un signal utile ultrasonore dans l'élément de couplage (3),
**caractérisé en ce que** la couche d'adhésif (5 ou 6) est fabriquée au moins partiellement au moyen d'une colle durcissable photochimiquement, l'élément de couplage (3) présentant au moins une surface de réflexion (9, 10), laquelle surface permet une déviation d'un rayonnement UV dans une zone de bordure du disque métallique (4), laquelle déviation intervient à travers la surface de couplage (3.3) dans l'élément de couplage (3).

2. Convertisseur à ultrasons selon la revendication 1, **caractérisé en ce que** la couche d'adhésif (5 et 6) présente des photoinitiateurs non réactifs ou des monomères résiduels, avec des groupes fonctionnels, lesquels forment des liaisons chimiques ou des radicaux.

3. Convertisseur à ultrasons selon l'une des revendications précédentes, **caractérisé en ce que** la couche d'adhésif (5 et 6) est réticulée photochimiquement dans la zone de bordure du disque métallique et réticulée thermiquement dans une zone centrale du disque métallique.

4. Convertisseur à ultrasons selon l'une des revendications précédentes, **caractérisé en ce que** la surface de réflexion (9, 10) présente une surface de focalisation (9, 10) pour la concentration du rayonnement UV sur une zone de bordure de la colle.

5. Convertisseur à ultrasons selon l'une des revendications précédentes, **caractérisé en ce que** la couche d'adhésif est fabriquée à partir d'une colle bi-composant, au moins un composant étant entouré d'un microencapsulage.

6. Convertisseur à ultrasons selon l'une des revendications précédentes, **caractérisé en ce que** l'élément de couplage (3) est au moins partiellement transparent.

7. Convertisseur à ultrasons selon l'une des revendications précédentes, **caractérisé en ce qu'**une couche d'adhésif (5 et 6) est disposée à la fois entre l'élément piézoélectrique (2) et le disque métallique (4), et entre le disque métallique (4) et l'élément de couplage (3), et **en ce que** la couche d'adhésif (6) présente entre le disque métallique (4) et l'élément de couplage (3) de préférence la même composition chimique que la couche d'adhésif (5) entre le disque métallique (4) et l'élément piézoélectrique (2).

8. Débitmètre à ultrasons destiné à la détermination de la vitesse d'écoulement ou du débit volumique d'un produit mesuré, avec un tube de mesure et au moins deux convertisseurs à ultrasons selon l'une des revendications 1 à 7, lesquels convertisseurs sont disposés le long du tube de mesure, chacun des convertisseurs à ultrasons présentant le corps de couplage avec une surface de couplage, au niveau de laquelle un signal ultrasonore généré peut être transmis ou reçu dans le tube de mesure ou dans le produit mesuré.
